Europäisches Patentamt

European Patent Office

Office européen des brevets

(19)

(11) Veröffentlichungsnummer: **0 264 777 B1**

## (12) EUROPÄISCHE PATENTSCHRIFT

(45) Veröffentlichungstag der Patentschrift: **22.05.91**

(51) Int. Cl.⁵: **B60S 1/08**

(21) Anmeldenummer: **87114932.4**

(22) Anmeldetag: **13.10.87**

(54) **Scheibenwischeranlage für Kraftfahrzeuge.**

(30) Priorität: **23.10.86 DE 3636038**

(43) Veröffentlichungstag der Anmeldung:
**27.04.88 Patentblatt 88/17**

(45) Bekanntmachung des Hinweises auf die
Patenterteilung:
**22.05.91 Patentblatt 91/21**

(84) Benannte Vertragsstaaten:
**DE ES FR GB**

(56) Entgegenhaltungen:
DE-A- 1 755 627
DE-A- 2 942 739
DE-B- 1 268 506
US-A- 4 670 695

PATENT ABSTRACTS OF JAPAN vol. 7, no.
193 (M-238)(1338) 24 August 83, & JP-A-58
93651 (TADANO TEKKOSHO) 03 Juni 83,

(73) Patentinhaber: **DEERE & COMPANY**
**1 John Deere Road**
**Moline, Illinois 61265(US)**

(72) Erfinder: **Willeke, Karl-Josef**
**Billrothstrasse 8**
**W-6660 Zweibrücken(DE)**

(74) Vertreter: **Feldmann, Bernhard**
**DEERE & COMPANY European Office, Patent**
**Department Steubenstrasse 36-42 Postfach**
**503**
**W-6800 Mannheim 1(DE)**

**Beschreibung**

Die Erfindung bezieht sich auf eine Scheibenwischeranlage für Kraftfahrzeuge mit einer Stromquelle und zwei über je einen Motor pendelnd zwischen einer Parklage und einer Umkehrlage elektrisch antreibbaren Scheibenwischern, wobei jedem Motor ein eigener Stromkreis zugeordnet ist, jeder Stromkreis mindestens einen durch ein Relais gesteuerten, in einer Endstellung an Masse anliegenden und in der anderen Endstellung den Stromkreis schließenden Wechselschalter aufweist und die Stromkreise für die Relais über einen manuell betätigbaren Schalter schließbar sind.

Bei dieser Scheibenwischeranlage (DE-A-32 48 118) werden über ein Steuergerät Schaltsignale zum Ein- und Ausschalten der Wischermotoren derart erzeugt, daß in der Umkehrlage der Scheibenwischer ein Motor früher anläuft als der zweite Motor. Hierzu ist ein Decoder vorgesehen. Im übrigen arbeiten die Wischermotoren gleichzeitig, wobei Vorkehrungen über einen Komparator getroffen sind, daß ein Wischer nicht in eine Wischfeldzone einlaufen kann, die der andere Wischer noch nicht verlassen hat. Eine Abschaltung beider Wischermotoren ist in der Parklage möglich. Damit diese Funktionen erfüllt werden können, ist ein hoher elektronischer Aufwand erforderlich.

Die mit der Erfindung zu lösende Aufgabe wird darin gesehen, eine preiswerte Möglichkeit vorzusehen, um eine Beschädigung der Wischerblätter, die durch Überschneiden eine möglichst große Scheibenfläche reinigen, zu verhindern. Diese Aufgabe ist nach der Erfindung dadurch gelöst worden, daß jedes Relais über den Wechselschalter des anderen Relais an Masse anlegbar ist, der manuell gesteuerte Schalter jeweils nur ein Relais mit der Stromquelle verbindet und die Stromquelle über je eine weitere Leitung mit jedem Relais verbindbar ist, die je einen motorgesteuerten Wischerschalter aufweisen. Auf diese Weise sind mit einem geringen baulichen Aufwand die Wischermotoren elektrisch derart verriegelt, daß ein Motor nur anlaufen kann, wenn der andere Motor stillsteht und der zugehörige Scheibenwischer eine definierte Lage eingenommen hat. Beide Motoren sind nur alternativ über den gemeinsamen Schalter einschaltbar, die vorstehende Wirkung tritt auch ein, wenn der Schalter sich bereits in der Betriebsstellung für den einzuschaltenden Motor oder in der Neutralstellung befindet, wobei in der Neutralstellung natürlich kein Anlaufen des anderen Motors erfolgt, wenn der Scheibenwischer des ersten Motors seine definierte Lage eingenommen hat.

Als definierte Lage bietet sich die Parklage an, weshalb nach der Erfindung vorgeschlagen wird, daß der Wischerschalter in seine Offenstellung verschwenkt, wenn der zugehörige Scheibenwischer seine Parklage einnimmt.

Zweckmäßig kann eine Diode in jeder weiteren Leitung vorgesehen sein.

Andererseits ist es auch möglich, jeden Scheibenwischer mit höheren Wischgeschwindigkeiten unter Beibehaltung der erfindungsgemäßen Vorteile laufen zu lassen. Hierzu ist nach der Erfindung, wenn jeder Motor mit einer zweiten Drehzahl antreibbar ist, in den diesbezüglichen Leitungen ein weiterer Wechselschalter und in den Leitungen für die erste Drehzahl je ein dritter Wechselschalter vorgesehen, die über zwei weitere Relais derart gesteuert werden, daß bei erregten Relais die Leitungen für die weitere Drehzahl geschlossen und die Leitungen für die erste Drehzahl durch die dritten Wechselschalter unterbrochen sind, wobei die weiteren Relais über den manuell betätigbaren Schalter an die Stromquelle und über die Wechselschalter der anderen Relais an Masse anschließbar sind.

Im folgenden wird die Erfindung anhand von zwei Ausführungswege darstellenden Zeichnungen näher erläutert. Es zeigt:

Fig. 1    ein elektrisches Schaltbild zur wechselweisen Zu- und Abschaltung zweier Motoren einer Wischeranlage,

Fig. 2    ein weiteres Ausführungsbeispiel einer Wischeranlage, wobei die entsprechenden Motoren jeweils mit zwei unterschiedlichen Drehzahlen angetrieben werden können.

In der Zeichnung ist mit 10 ein Mehrstellenschalter, beispielsweise ein Dreistellenschalter, bezeichnet, der in eine erste Betriebsstellung I, in eine Nullstellung 0 und in eine zweite Betriebsstellung II verstellt werden kann. Der Mehrstellenschalter 10 ist mit einem Schalthebel 15 und einem über diesen betätigbaren Schaltkontakt 16 ausgestattet, der zwischen einer Anschlußstelle 1 und einer Anschlußstelle 2 verschwenkbar ist und über eine elektrische Leitung 17 mit einer positiven Anschlußklemme 18 für einen Hilfsstromkreis verbunden ist. Die Anschlußstelle 1 ist über eine elektrische Leitung 19 an eine Anschlußklemme 86 eines Schaltrelais R1 angeschlossen, das über eine Anschlußklemme 85 und eine elektrische Leitung 20 mit einer Anschlußklemme 30b eines über ein zweites Schaltrelais R2 betätigbaren Wechselschalters 25 verbunden ist, der mit einer negativen Anschlußklemme 87c (Masse) und einer positiven Anschlußklemme 87b verbindbar ist. Die positive Anschlußklemme 87b ist über eine elektrische Leitung 26 an eine in der Zeichnung nicht dargestellte Stromquelle, wie eine Batterie, angeschlossen.

Die Anschlußstelle 2 des Mehrstellenschalters 10 ist über eine elektrische Leitung 27 an die Eingangsseite bzw. Anschlußklemme 86a des zweiten Schaltrelais R2 angeschlossen, das über eine Anschlußklemme 85a und eine elektrische Leitung 28 an eine Anschlußklemme 30a eines Wechselschalters 29 des Schaltrelais R1 angeschlossen ist. Der Wechselschalter 29 ist zwischen einer positiven Anschlußklemme 87, die an eine Batterie angeschlossen ist, und einer negativen Anschlußklemme 87a (Masse) verstellbar.

Die elektrische Leitung 28 ist an eine erste Anschlußstelle 53 angeschlossen, die über einen induktiven Widerstand 32 mit der Eingangsseite des Motors M1 verbunden ist, während die Ausgangsseite des Motors M1 über eine elektrische Leitung 33 mit einer zweiten negativen Anschlußstelle 31 (Masse) verbunden ist.

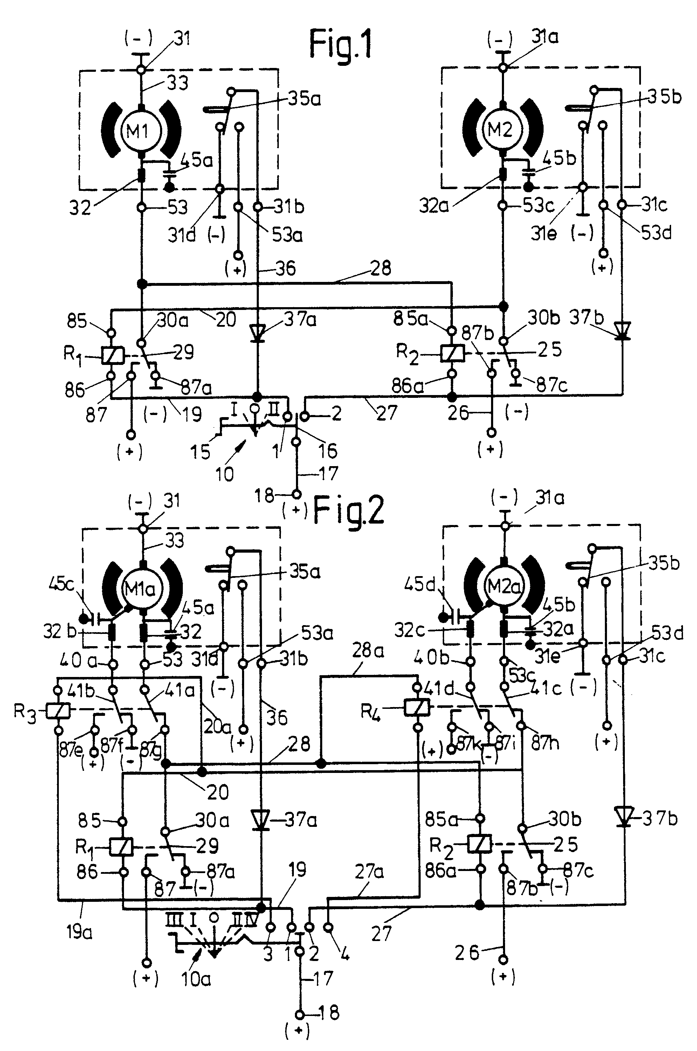

Dem Motor M1 ist ein Wischerschalter 35a zugeordnet, der über ein in der Zeichnung nicht dargestelltes Stellglied über die Drehung des Motors zwischen einer an Masse angeschlossenen Anschlußstelle 31d und einer an eine Stromquelle angeschlossenen Anschlußstelle 53a verschwenkbar ist. Befindet sich der in der Zeichnung nicht dargestellte, über den Motor M1 angetriebene Wischer in seiner Parkstellung, wenn der Motor M1 abgestellt worden ist, so nimmt der Wischerschalter 35a seine in Fig. 1 dargestellte Parkstellung ein, während bei angetriebenem Motor M1 der Wischerschalter zwischen der gezeichneten Stellung und der rechten Stellung verschwenkt wird, in der die Anschlußstelle 53a über den Wischerschalter 35a mit einer Anschlußstelle 31b verbunden ist, die über eine elektrische Leitung 36 und eine Diode 37a mit der elektrischen Leitung 19 verbunden ist. In der rechten Stellung des Wischerschalters 35a ist damit das Schaltrelais R1 mittels seiner Anschlußklemme 86 an die positive Anschlußstelle 53a angeschlossen und wird mit Strom versorgt, so daß das Schaltrelais RI den Wechselschalter 29 in seiner linken Stellung halten kann. In dieser Position des Wechselschalters 29 ist die Anschlußklemme 87 mit der Anschlußstelle 53 des Motors M1 verbunden, so daß dieser mit Strom versorgt wird und umläuft.

Der in Fig. 1 rechts dargestellte Motor M2 ist auf gleiche Weise wie der linke Motor M1 über den Mehrstellenschalter 10 an die Stromquelle anschließbar. Im einzelnen ist die elektrische Leitung 20 ebenfalls mit einer ersten Anschlußstelle 53c und über einen induktiven Widerstand 32a mit der Eingangsseite des Motors M2 an einer Stelle zwischen der Anschlußstelle 30b und der Anschlußstelle 53c verbunden, wobei die Ausgangsseite des Motors M2 an eine negative Anschlußstelle 31a (Masse) angeschlossen ist. Auch der Motor M2 steht wiederum mit einem Wischerschalter 35b in Verbindung, dessen Wischer ebenfalls gemäß Fig. 1 seine Parkstellung eingenommen hat, in der der Wischerschalter 35b mit der an Masse anliegenden Anschlußstelle 31e verbunden ist. Wird der Motor M2 bei erregtem Schaltrelais R2 angetrieben, so wird der Wischerschalter 35b zwischen der gezeichneten Stellung und der rechten Stellung verschwenkt, in der eine an eine Stromquelle angeschlossene Anschlußstelle 53d über eine Anschlußstelle 31c und eine Diode 37b sowie die elektrische Leitung 27 mit der Anschlußklemme 86a des Schaltrelais R2 verbunden ist. Bei angetriebenem Motor M2 nimmt der Wechselschalter 25 seine linke Stellung ein, in der der Motor M2 an das Stromnetz angeschlossen ist, sich der Mehrstellenschalter 10 in seiner Betriebsstellung II befindet und der Schaltkontakt 16 an der Anschlußstelle 2 anliegt.

In Fig. 2 sind gleiche Teile, wie sie in Fig. 1 beschrieben sind, mit den gleichen Bezugsziffern bezeichnet. In Fig. 2 sind der Motor M1a und der Motor M2a für zwei Geschwindigkeiten ausgelegt, so daß die Motoren M1a und M2a neben der Anschlußstelle 53 und 53c je eine weitere Anschlußklemme 40a und 40b aufweisen, über die sie an das Stromnetz anschließbar sind. Ein Mehrstellenschalter 10a ist als Fünfstellenschalter ausgerüstet und läßt sich zwischen einer Nullstellung 0 und vier Betriebsstellungen I bis IV verstellen, so daß die zugehörigen Anschlußstellen 1 bis 4 über die elektrische Leitung 17 an die positive Anschlußklemme 18 anschließbar sind, die mit einer in der Zeichnung nicht dargestellten Spannungsquelle verbunden ist. Ferner sind Schaltrelais R3 und R4 sowie über diese betätigbare Wechselschalter 41a, 41b und 41c, 41d vorgesehen, die zwischen Anschlußklemmen 87e bis 87k verstellbar sind. Hinzu kommt, daß das Schaltrelais R3 über eine Leitung 19a mit der Anschlußstelle 3 und über eine Leitung 20a mit der Leitung 20 verbunden ist. Entsprechend ist das Schaltrelais R4 über eine Leitung 27a an die Anschlußstelle 4 und über eine Leitung 28a an die Leitung 28 angeschlossen. Befindet sich das Schaltrelais R3 bzw. R4 in der in Fig. 2 dargestellten Stellung, so ist in der linken Stellung des Wechselschalters 29 des Schaltrelais R1 der Motor M1a über den zugehörigen Wechselschalter 41a und die Anschlußstelle 53 an das Stromnetz angeschlossen, während bei erregtem Schaltrelais R3 bzw. R4 der Wechselschalter 41b bzw. 41d in seine linke Stellung geschwenkt ist, in der der Wechselschalter 41a bzw. 41c keinen Kontakt mit der Anschlußklemme 87g bzw. 87h hat, und der Motor M1a bzw. M2a an das Stromnetz angeschlossen ist, so daß sie in dieser Stellung mit einer höheren Drehzahl arbeiten können. Da die übrigen Schaltelemente mit den in Fig. 1 dargestellten Schaltelementen identisch sind und auch die gleiche Funktion haben, sind diese nicht weiter erläutert. Jeder Motor M1 bis M2a ist jeweils mit einem Kondensator 45a bis 45d ausgestattet, die jeweils parallel zu den entsprechenden induktiven Widerständen 32 bis 32c geschaltet sind. Hierdurch erhält man eine Störschaltung, die Störgeräusche in einem Rundfunkgerät ausschaltet.

Im Arbeitseinsatz wird beispielsweise zuerst der erste Motor M1 über den Mehrstellenschalter 10 mit Strom versorgt, der beispielsweise einen Wischer eines in der Zeichnung nicht dargestellten Mähdreschers antreiben kann. Der Wischer wird hierzu auf der unteren Hälfte der Windschutzscheibe der Fahrerkabine des Mähdreschers angeordnet. Ein zweiter Wischer wird über den Motor M2 angetrieben. Dieser Wischer kann beispielsweise an der oberen Hälfte der Windschutzscheibe der Fahrerkabine angeordnet sein.

Die vorstehend beschriebene Schaltung dient zum Antrieb von zwei Scheibenwischern, die sich im Wischfeld einer Scheibe überschneiden und mit einer oder zwei Geschwindigkeiten derart angetrieben werden können, daß ihre Wischblätter sich nicht berühren. Ein bevorzugtes Anwendungsgebiet ist die in der Regel durchgehende Frontscheibe einer Fahrerkabine eines Mähdreschers, wo ein Scheibenwischer mittig an der Unterkante und ein weiterer Scheibenwischer mittig an der Oberkante der Fahrerkabine angeordnet sein können.

Normalerweise arbeitet lediglich der Motor M1 und treibt den unteren Wischer an. In besonderen Fällen kann es jedoch auch vorteilhaft sein, daß die gesamte Scheibe der Fahrerkabine gereinigt werden soll. Hierzu wird kurzfristig der Motor M2 über den Mehrstellenschalter 10 mit Strom versorgt und der Motor M1 abgeschaltet, so daß die obere Hälfte der Windschutzscheibe über den zweiten Wischer gereinigt wird.

Wird beispielsweise der Mehrstellenschalter 10 in seine Betriebsstellung I bei der Ausführung nach Fig. 1 verstellt, so wird der Stromkreis für den Motor M1 geschlossen und letzterer angetrieben. Beim Anliegen des Schaltkontakts 16 an der Anschlußstelle 1 wird das Schaltrelais R1 über die Leitungen 19 und 20 an Masse angeschlossen, da sich bei nicht erregtem Schaltrelais R2 der Wechselschalter 25 in seiner in Fig. 1 eingezeichneten rechten Position befindet, in der er an der Anschlußklemme 87c anliegt. In diesem Zustand schließt der Wechselschalter 29 den Stromkreis für den Motor M1 über die Anschlußklemme 87. Bei umlaufendem Motor M1 wird auch der Wischerschalter 35a beispielsweise über eine Nockensteuerung ständig derart betätigt, daß er zwischen seinen Anschlußstellen 31 und 53a hin- und herbewegt wird, wobei die Parkstellung des Wischers einer Stellung entspricht, in der der Wischerschalter 35a von der Anschlußstelle 53a abgehoben hat. Liegt aber der Wischerschalter 35a dagegen an der Anschlußstelle 53a an, so wird ebenfalls ein Strom über die Anschlußstelle 31b, die Leitung 36, die Diode 37a, die Leitung 19, das Relais R1 und die Leitung 20 zur Anschlußklemme 87c fließen, so daß der Wechselschalter 29 in seiner den Stromkreis zum Motor M1 schließenden linken Stellung gehalten wird, auch wenn der Mehrstellenschalter 10 aus seiner Betriebsstellung I verstellt wurde. Befindet sich also der Wischerschalter 35a in seiner rechten Stellung, so wird das Relais R1 einmal über den Mehrstellenschalter 10 und über den Wischerschalter 35a mit Strom versorgt. Wird der Mehrstellenschalter 10 in seine Nullstellung verstellt, so kann das Relais R1 nicht mehr über die Anschlußstelle 1 mit Strom versorgt werden, sondern nur noch über den Wischerschalter 35a, solange er sich in seiner rechten Stellung befindet. Solange der Wechselschalter 29 des Schaltrelais R1 sich in seiner linken Stellung befindet, kann auch bei einer Verstellung des Mehrstellenschalters 10 in seine Betriebsstellung II, in der der Schaltkontakt 16 an der Anschlußstelle 2 anliegt, der Stromkreis für den Motor M2 nicht geschlossen werden, da über das Schaltrelais R2 in diesem Fall kein Strom fließen kann, weil der Massekontakt fehlt. Ein Verstellen des Wechselschalters 25 aus seiner rechten Stellung ist damit ausgeschlossen, solange der Wischerschalter 35a den Stromkreis für das Schaltrelais R1 geschlossen hält. Erst wenn der Wischerschalter 35a von der Anschlußstelle 53a abhebt und damit den Stromkreis für das Schaltrelais R1 unterbricht, kann das Schaltrelais R2 bei sich in Betriebsstellung II befindlichem Mehrstellenschalter 10 über den Wechselschalter 25 den Stromkreis für den Motor M2 schließen, da bei nicht erregtem Schaltrelais R1 der Wechselschalter 29 sofort in seine rechte Stellung zurückgeht und den Stromkreis für den Motor M1 unterbricht. In diesem Fall bzw. in der zweiten Betriebsstellung fließt der Hilfsstrom von der Anschlußklemme 18 über die Leitung 27, das Relais R2, die Leitung 28 und den Wechselschalter 29, der jetzt an der Masse liegt, zu der Anschlußklemme 87a. Bei erregtem Schaltrelais R2 wird der Wechselschalter 25 in seine linke Stellung verstellt, in der er den Hauptstromkreis für den Motor M2 schließt. Der Wischerschalter 35b arbeitet in derselben Weise wie der Wischerschalter 35a, so daß wiederum ausgeschlossen ist, daß der Stromkreis für den Motor M1 geschlossen wird, solange der Motor M2 läuft. Eine dritte und vierte Betriebsstellung, in der die Motoren M1 und M2 mit einer höheren Drehzahl umlaufen, wird durch Anschließen der Schaltrelais R3 und R4 an die Anschlußstellen 3 und 4 erreicht, wie es in der Ausführung nach Fig. 2 gezeigt ist. Die Schaltrelais R3 und R4 betätigen die Wechselschalter 41a bis 41d derart, daß bei nicht stromführenden Schaltrelais R3 bzw. R4 die Wechselschalter 41a und 41c den Stromkreis für niedrige Drehzahl der Motoren M1a und M2a geschlossen und die Wechselschalter 41b und 41d den Stromkreis für hohe Drehzahl der Motoren M1a und M2a geöffnet halten, d. h. die Wechselschalter 41a bis 41d befinden sich in ihren in Fig. 2 wiedergegebenen Stellungen. Bei stromführenden Schaltrelais R3 und R4 kippen die Wechselschalter 41a bis 41d in ihre linken Endstellungen. Die Wirkungsweise der Schaltung nach Fig. 2 entspricht derjenigen nach Fig. 1, wobei, auch wenn die Stromkreise für die höhere Drehzahl der Motoren M1a und M2a geschlossen sind, bei Anlage der Wischerschalter 35a und 35b an die Anschlußstellen 53a und 53d der Stromkreis über die Schaltrelais R1 und R2 geschlossen wird.

Durch diese Schaltanordnung kann auch der Schaltstrom für die Mehrstellenschalter 10 und 10a sehr gering sein, da nur eine kleine Stromstärke zur Steuerung des Schaltrelais R1 bzw. R2 oder R3 und R4 erforderlich ist. Hierdurch läßt sich ein sehr preiswerter handelsüblicher Wechselschalter 10 bzw. 10a für die Schaltanordnung gemäß Fig. 1 und 2 verwenden.

**Ansprüche**

1. Scheibenwischeranlage für Kraftfahrzeuge mit einer Stromquelle und zwei über je einen Motor (M1, M2 bzw. M1a, M2a) pendelnd zwischen einer Parklage und einer Umkehrlage elektrisch antreibbaren Scheibenwischern, wobei jedem Motor (M1, M2 bzw. M1a, M2a) ein eigener Stromkreis zugeordnet ist, jeder Stromkreis mindestens einen durch ein Relais (R 1 bis R4) gesteuerten, in einer Endstellung an Masse anliegenden und in der anderen Endstellung den Stromkreis schließenden Wechselschalter (29, 25) aufweist und die Stromkreise für die Relais (R1 bis R4) über einen manuell betätigbaren Schalter (10 bzw. 10a) schließbar sind, dadurch gekennzeichnet, daß jedes Relais (R1, R2) über den Wechselschalter (25 bzw. 29) des anderen Relais (R2, R1) an Masse anlegbar ist, der manuell gesteuerte Schalter (10 bzw. 10a) jeweils nur ein Relais (R1 bzw. R2) mit der Stromquelle verbindet und die Stromquelle über je eine weitere Leitung mit jedem Relais verbindbar ist, die je einen (M1, M2 bzw. M1a, M2a) motorgesteuerten Wischerschalter (35a bzw. 35b) aufweisen.

2. Scheibenwischeranlage nach Anspruch 1, dadurch gekennzeichnet, daß der Wischerschalter (35a bzw. 35b) in seine Offenstellung verschwenkt, wenn der zugehörige Scheibenwischer seine Parklage einnimmt.

3. Scheibenwischeranlage nach Anspruch 1, dadurch gekennzeichnet, daß eine Diode (37a, b) in jeder weiteren Leitung vorgesehen ist.

4. Scheibenwischeranlage nach einem oder mehreren der vorherigen Ansprüche, dadurch gekennzeichnet, daß jeder Motor (M1a, M2a) mit einer zweiten Drehzahl antreibbar ist, in den diesbezüglichen Leitungen ein weiterer Wechselschalter (41b, 41d) und in den Leitungen für die erste Drehzahl je ein dritter Wechselschalter (41a, 41c) vorgesehen sind, die über zwei weitere Relais (R3, R4) derart gesteuert werden, daß bei erregten Relais (R3, R4) die Leitungen für die weitere Drehzahl geschlossen und die Leitungen für die erste Drehzahl durch die dritten Wechselschalter (41a, 41c) unterbrochen sind, wobei die weiteren Relais (R3, R4) über den manuell betätigbaren Schalter (10a) an die Stromquelle und über die Wechselschalter (25, 29) der anderen Relais (R2, R1) an Masse anschließbar sind.

**Claims**

1. Windscreen wiper arrangement for motor vehicles with a current source and two windscreen wipers drivable electrically, each via a motor (M1, M2 or M1a. M2a). oscillating between a parking position and a reversing position. wherein each motor (M1, M2 or M1a. M2a) has its own circuit, each circuit has at least one changeover switch (29, 25) controlled through a relay (R1 to R4) and connecting to earth in one end position and closing the circuit in the other end position. and the circuits for the relays (R1 to R4) can be closed through a manually operable switch (10 or 10a), characterized in that each relay (R1, R2) can be connected to earth via the changeover switch (29, 25 respectively) of the other relay (R2, R1), the manually controlled switch (10 or 10a) connects only one relay (R1 or R2) at a time to the current source and the current source can be connected to each relay through a further line which has in each case a (M1, M2 or M1a, M2a) motor controlled wiper switch (35a or 35b).

2. Windscreen wiper arrangement according to claim 1, characterized in that the wiper switch (35a or 35b) moves into its open position when the associated windscreen wiper assumes its parking position.

3. Windscreen wiper arrangement according to claim 1, characterized in that a diode (37a, b) is provided in each further line.

**4.** Windscreen wiper arrangement according to one or more of the preceding claims. characterized in that each motor (M1a, M2a) can be driven at a second speed, there are provided in the lines corresponding thereto a further changeover switch (41b, 41d) and in the lines for the first speed a third changeover switch (41a. 41c) each, which are so controlled through two further relays (R3, R4) that, with the relays (R3, R4) energised, the lines for the further speed are closed and the lines for the first speed are interrupted by the third changeover switches (41a, 41c), wherein the further relays (R3, R4) can be connected through the manually operable switch (10a) to the current source and through the changeover switches (25. 29) of the other relays (R2, R1) to earth.

## Revendications

**1.** Installation d'essuie-glace pour véhicules automobiles, comportant une source de courant et deux essuieglaces pouvant être entraînés électriquement par des moteurs respectifs (M1,M2 ou M1a,M2a) de manière à osciller entre une position rangée et une position d'inversion de marche, et dans laquelle un circuit particulier est associé à chaque moteur (M1,M2 ou M1a,M2a), chaque circuit possède au moins un commutateur inverseur (29,25) qui est commandé par un relais (R1 à R4), est raccordé à la masse, dans une position d'extrémité, et ferme le circuit, dans son autre position d'extrémité, et les circuits des relais (R1 à R4) peuvent être raccordés par un commutateur (10 ou 10a) pouvant être actionné manuellement, caractérisée en ce que chaque relais (R1,R2) peut être raccordé à la masse par le commutateur inverseur (25 ou 29) de l'autre relais (R2,R1), que le commutateur (10 ou 10a) commandé manuellement raccorde respectivement seulement un relais (R1 ou R2) à la source de courant et que la source de courant peut être reliée à chaque relais par un autre conducteur respectif qui contient respectivement un commutateur d'essuie-glace (35a,35b) commandé par un moteur respectif (M1,M2 ou M1a,M2a).

**2.** Installation d'essuie-glace selon la revendication 1, caractérisée en ce que le commutateur d'essuieglace (35a,35b) est basculé dans sa position ouverte lorsque l'essuie-glace associé est dans sa position rangée.

**3.** Installation d'essuie-glace selon la revendication 1, caractérisée en ce qu'une diode (37a,b) est prévue dans chacun des autres conducteurs.

**4.** Installation d'essuie-glace selon une ou plusieurs des revendications précédentes, caractérisée en ce que chaque moteur (M1a,M2a) peut tourner à une seconde vitesse de rotation, qu'un autre commutateur inverseur (41b,41d) est prévu dans les conducteurs raccordés à ces moteurs et que des troisièmes commutateurs inverseurs respectifs (41a,41c) sont prévus dans les conducteurs pour la première vitesse de rotation, ces commutateurs inverseurs étant commandés par deux autres relais (R3,R4) de sorte que, lorsque ces relais sont excités, les conducteurs pour l'autre vitesse de rotation sont fermés et les conducteurs pour la première vitesse de rotation sont interrompus par les troisièmes commutateurs inverseurs (41a,41c), les autres relais (R3,R4) pouvant être raccordé à la source de courant au moyen du commutateur (10a) pouvant être actionné manuellement et à la masse au moyen des commutateurs inverseurs (25,29) des autres relais (R2,R1).

# Fig.1

# Fig.2